(19) **Europäisches Patentamt**
**European Patent Office**
**Office européen des brevets**

(11) **EP 4 527 064 B1**

(12) **FASCICULE DE BREVET EUROPEEN**

(45) Date de publication et mention
de la délivrance du brevet:
**18.02.2026 Bulletin 2026/08**

(21) Numéro de dépôt: **23727076.4**

(22) Date de dépôt: **02.05.2023**

(51) Classification Internationale des Brevets (IPC):
**H04M 9/08** (2006.01)

(52) Classification Coopérative des Brevets (CPC):
**H04M 9/082**

(86) Numéro de dépôt international:
**PCT/IB2023/054540**

(87) Numéro de publication internationale:
**WO 2023/223128 (23.11.2023 Gazette 2023/47)**

(54) **ÉQUIPEMENT DE COMMUNICATION PERMETTANT UN DUPLEX INTÉGRAL AVEC UNE PRISE DE SON DANS L'OREILLE ET SYSTÈME DE COMMUNICATION LE COMPRENANT**

KOMMUNIKATIONSAUSRÜSTUNG, DIE VOLLDUPLEX MIT TONAUFNAHME IM OHR ERLAUBT, UND KOMMUNIKATIONSSYSTEM DAMIT

COMMUNICATION EQUIPMENT ALLOWING FULL DUPLEX WITH SOUND PICK-UP IN THE EAR, AND COMMUNICATION SYSTEM COMPRISING SAME

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.05.2022 FR 2204619**

(43) Date de publication de la demande:
**26.03.2025 Bulletin 2025/13**

(73) Titulaire: **ISL - Institut franco-allemand de recherches de Saint-Louis
68300 Saint-Louis (FR)**

(72) Inventeurs:
• **ZIMPFER, Véronique**
  **68000 COLMAR (FR)**
• **HAMERY, Pascal**
  **68400 RIEDISHEIM (FR)**

(74) Mandataire: **Cabinet Chaillot
16/20, avenue de l'Agent Sarre
B.P. 74
92703 Colombes Cedex (FR)**

(56) Documents cités:
EP-A1- 3 188 507     US-A1- 2009 147 966
US-A1- 2022 014 849

**Description**

La présente invention concerne le domaine technique des communications avec prise de son dans l'oreille de l'utilisateur, et porte plus particulièrement sur un équipement de communication permettant un duplex intégral avec une prise de son dans l'oreille et sur un système de communication le comprenant.

A ce jour, la très grande majorité des équipements de communication avec une prise de la voix de l'utilisateur dans l'oreille utilisent un bouton PTT, ou Push To Talk en anglais. Ce bouton permet de stopper l'émission de son par le haut-parleur situé, dans l'oreille, juste à côté du microphone utilisé pour la prise de son. Ces équipements permettent une communication en semi-duplex, ou half duplex en anglais. Sans utilisation du bouton PTT, le microphone situé dans le canal auditif de l'utilisateur enregistre simultanément et de manière indissociable la voix de l'utilisateur, la voix du ou des interlocuteurs et éventuellement une restitution de l'environnement sonore de l'utilisateur. En effet, une grande partie de ces équipements mettent également en œuvre une restitution de l'environnement sonore à l'utilisateur, ou système pass-through ou talk-through en anglais. Cette restitution est nécessaire pour éviter d'isoler l'utilisateur de son environnement acoustique, notamment dans le cas où l'équipement comprend des protections auditives intra-auriculaires. On comprend qu'une communication en semi-duplex qui repose sur l'utilisation d'un bouton PTT peut être contraignante, notamment lors d'une conversation. Une alternative au bouton PTT est l'utilisation d'un détecteur de parole, qui, s'il détecte une activité de parole de l'utilisateur, arrête automatiquement l'émission du signal de phonie et la restitution de l'environnement sonore, et enregistre la voix de l'utilisateur. Cependant, ce système présente également des inconvénients, notamment le fait de provoquer un arrêt involontaire de l'émission du signal de phonie et de la restitution de l'environnement sonore lorsque l'utilisateur parle directement avec une personne à côté de lui, sans utiliser de système de radiophonie. Par ailleurs, pour les équipements de communication avec prise de son dans l'oreille, les algorithmes anti-écho classiques ne peuvent pas s'appliquer car le microphone de prise de son est très proche du haut-parleur. Il est donc difficile de mettre en place une communication en duplex intégral, ou full-duplex en anglais.

Dans l'art antérieur, la demande de brevet européen EP3188507 A1 propose un dispositif auditif portable qui permet de mettre en place une communication en quasi duplex intégral avec une restitution de l'environnement sonore. Dans ce document, le son du signal de phonie source et le son de la restitution de l'environnement sonore, captés par le microphone de prise de son dans l'oreille, sont atténués dans le signal de phonie retour par l'utilisation d'un circuit électronique de filtre de compensation utilisant une fonction de transfert estimée modélisant la fonction de transfert acoustique dans l'oreille de l'utilisateur entre le haut-parleur et le microphone de prise de son du dispositif. Cependant, cette solution présente certains inconvénients, le dispositif de compensation est complexe, la fonction de transfert peut être difficile à modéliser et son efficacité reste limitée notamment sur les basses fréquences. Cette solution n'est également pas adaptée à une utilisation avec des protections auditives. Ce document EP3188507 A1 concerne en particulier les aides auditives. Il n'est pas applicable à un protecteur auditif dont l'étanchéité avec l'extérieur est maximale, ce qui est le but recherché pour un protecteur auditif. Dans ce document EP3188507 A1, la stabilité de la fonction de transfert haut-parleur/microphone interne est essentielle et surtout en basses fréquences. De plus, ce document est incapable de traiter une charge de calcul importante.

US 2009/147966 A1 et US 2022/014849 A1 décrivent un équipement de communication selon l'état de la technique.

Par conséquent, les solutions de l'art antérieur proposées pour les équipements de communication avec prise de son dans l'oreille présentent toujours des inconvénients et des améliorations sont possibles.

L'invention a notamment pour objectif de proposer un équipement de communication, notamment au moins en partie intra-auriculaire, configuré pour permettre une communication en duplex intégral avec une prise de son dans l'oreille. Un autre objectif de l'invention est de proposer un équipement de communication configuré pour générer un signal de phonie de retour.

Un autre objectif de l'invention est de proposer un équipement de communication configuré pour fournir une fonction anti-écho simple et efficace pour éviter de renvoyer à l'interlocuteur sa propre voix et éviter le larsen.

Un autre objectif de l'invention est de proposer un équipement de communication configuré pour fournir une fonction anti-écho par émission du signal de phonie en opposition de phase dans l'oreille droite et l'oreille gauche de l'utilisateur.

Un autre objectif de l'invention est de proposer un équipement de communication configuré pour permettre une restitution de l'environnement sonore à l'utilisateur. Un autre objectif de l'invention est de proposer un équipement de communication configuré pour diminuer au maximum la restitution de l'environnement sonore envoyée à l'interlocuteur ou aux interlocuteurs.

Un autre objectif de l'invention est de proposer un équipement de communication configuré pour restituer l'environnement sonore à l'utilisateur de manière atténuée. Un autre objectif de l'invention est de proposer un équipement de communication configuré pour permettre, simultanément, à un utilisateur de parler et d'écouter un signal de phonie et éventuellement une restitution de l'environnement sonore sans appui sur un bouton.

Un autre objectif de l'invention est de proposer un équipement de communication comprenant une protection auditive intra-auriculaire.

Un autre objectif de l'invention est de proposer un système de communication permettant une communication en duplex intégral avec une prise de son dans l'oreille à l'aide d'appareils de communication et d'équipements de communication selon l'invention.

Ainsi, la présente invention a pour objet un équipement de communication permettant un duplex intégral avec une prise de son dans l'oreille, l'équipement de communication étant configuré pour recevoir au moins un signal de phonie source transmis par au moins un appareil de communication et pour fournir un signal de sortie total, l'équipement de communication comprenant : un premier dispositif conçu pour être inséré dans l'une parmi une oreille droite et une oreille gauche d'un utilisateur, et un second dispositif conçu pour être inséré dans l'autre parmi l'oreille droite et l'oreille gauche de l'utilisateur ; chacun parmi le premier dispositif et le second dispositif comprenant un premier microphone et un haut-parleur configurés pour être disposés, en utilisation, en regard d'un canal auditif de l'utilisateur ; caractérisé par le fait que : l'équipement de communication est configuré de telle sorte qu'un premier signal de phonie est délivré au haut-parleur du premier dispositif et qu'un second signal de phonie est délivré au haut-parleur du second dispositif, les premier et second signaux de phonie étant basés sur l'au moins un signal de phonie source de telle sorte que le premier signal de phonie et le second signal de phonie sont en opposition de phase, c'est-à-dire déphasés de Pi ; le premier microphone du premier, respectivement du second, dispositif est configuré pour capter, dans l'oreille respective, au moins une voix de l'utilisateur et un son du premier, respectivement du second, signal de phonie généré par le haut-parleur du premier, respectivement du second, dispositif, et pour délivrer en sortie un signal de prise de son du premier, respectivement du second, dispositif ; l'équipement de communication est configuré pour générer un signal de pré-sortie correspondant au premier dispositif, et un signal de pré-sortie correspondant au second dispositif, respectivement à partir du signal de prise de son du premier et du second dispositif et pour générer un signal de sortie correspondant au premier dispositif et un signal de sortie correspondant au second dispositif, comprenant respectivement, au moins une composante liée au signal de pré-sortie correspondant au premier dispositif et une composante liée au signal de pré-sortie correspondant au second dispositif ; et l'équipement de communication comprend en outre un premier sommateur configuré pour recevoir en entrée et pour sommer le signal de sortie du premier dispositif et le signal de sortie du second dispositif, le premier sommateur délivrant en sortie le signal de sortie total égal à la somme du signal de sortie du premier dispositif et du signal de sortie du second dispositif, et le signal de sortie total comprenant une composante de voix de l'utilisateur et étant exempt de composante des premier et second signaux de phonie.

Un équipement de communication avec prise de son dans l'oreille selon le mode de réalisation décrit ci-dessus permet d'émettre en continu le signal de phonie source dans les oreilles de l'utilisateur et d'obtenir un signal de sortie total comprenant uniquement une composante correspondant à la voix de l'utilisateur. Ceci permet de mettre en place une communication en duplex intégral. Le signal de phonie source, généralement la voix de l'interlocuteur, est émis en opposition de phase, c'est-à-dire déphasé de Pi, dans l'oreille droite et l'oreille gauche de telle sorte que la sommation de la prise de son dans l'oreille droite et de la prise de son dans l'oreille gauche élimine le son lié au signal de phonie source.

L'équipement de communication selon ce mode de réalisation est donc configuré pour mettre en œuvre une fonction anti-écho simple et très efficace.

L'équipement de communication peut éventuellement recevoir des signaux de phonie sources provenant de plusieurs appareils de communication, dans ce cas l'équipement de communication est configuré pour combiner les différents signaux de phonie sources reçus.

Les appareils de communication peuvent, par exemple, être une radio, un talkie-walkie, un téléphone, un téléphone intelligent, une tablette numérique ou un ordinateur.

Selon un mode de réalisation, l'équipement de communication comprend en outre un module de traitement de signal de sortie total configuré pour traiter le signal de sortie total afin de générer, à partir du signal de sortie total, au moins l'un parmi un signal de phonie de retour et deux signaux de phonie de retour en opposition de phase, le traitement étant au moins l'un parmi une diminution de l'effet d'occlusion, une diminution de l'effet de la transmission osseuse, et une amplification, afin de rendre le signal de sortie total plus naturel pour l'interlocuteur.

Dans le cas d'une prise de son dans l'oreille, en raison de l'effet d'occlusion et de la transmission osseuse, la voix, c'est-à-dire le signal de parole, de l'utilisateur capté dans l'oreille est fortement amplifié dans le domaine des basses fréquences, notamment inférieures à 500 Hz. Le traitement du signal de sortie total peut donc, par exemple, consister en un traitement permettant de rendre le son de la voix de l'utilisateur plus naturel pour l'interlocuteur, afin d'améliorer la qualité et l'intelligibilité de la parole.

Selon un mode de réalisation, l'équipement de communication est configuré pour recevoir deux signaux de phonie sources en opposition de phase en provenance de chaque appareil de communication, pour utiliser l'un des deux signaux de phonie sources afin de générer le premier signal de phonie et le délivrer au haut-parleur du premier dispositif, et pour utiliser l'autre des signaux de phonie sources afin de générer le second signal de phonie et le délivrer au haut-parleur du second dispositif. Selon un mode de réalisation, l'équipement de communication comprend un module de traitement de signal de phonie source configuré pour recevoir un seul signal de phonie source en provenance de chaque appareil de communication et pour générer le premier signal de phonie et le second signal de phonie en opposition de phase à partir de l'au moins un signal de phonie source.

Selon un mode de réalisation, l'équipement de communication est configuré pour déphaser de Pi l'au moins un signal de phonie source afin de générer le premier signal de phonie, et pour ne pas déphaser le signal de phonie source afin de générer le second signal de phonie.

On comprendra que les différents modes de réalisation décrits ci-dessus sont des configurations qui permettent d'émettre en opposition de phase, c'est-à-dire avec un déphasage de Pi, dans l'oreille droite et l'oreille gauche de telle sorte que la sommation de la prise de son dans l'oreille droite et de la prise de son dans l'oreille gauche élimine le son lié au signal de phonie source.

Selon un mode de réalisation, au moins un dispositif, désigné dispositif à restitution de l'environnement sonore, parmi le premier dispositif et le second dispositif comprend un second microphone, disposé sur une surface externe de l'au moins un dispositif à restitution de l'environnement sonore et dirigé vers l'extérieur, le second microphone étant configuré pour capter un bruit environnant et délivrer en sortie un signal de bruit environnant source de l'au moins un dispositif à restitution de l'environnement sonore ; l'équipement de communication étant configuré pour générer un signal de bruit environnant correspondant à l'au moins un dispositif à restitution de l'environnement sonore à partir du signal de bruit environnant source ; l'équipement de communication comprend en outre, pour chaque dispositif à restitution de l'environnement sonore : un second sommateur configuré pour recevoir en entrée et pour sommer le signal de bruit environnant correspondant à l'au moins un dispositif à restitution de l'environnement sonore et le signal de phonie configuré pour être délivré au haut-parleur de l'au moins un dispositif à restitution de l'environnement sonore, et pour délivrer en sortie la somme au haut-parleur de l'au moins un dispositif à restitution de l'environnement sonore ; un module de filtrage, relié au second microphone, configuré pour recevoir le signal de bruit environnant correspondant à l'au moins un dispositif à restitution de l'environnement sonore, pour filtrer le signal de bruit environnant correspondant à l'au moins un dispositif à restitution de l'environnement sonore par une fonction de transfert estimée, et pour délivrer en sortie un signal de bruit environnant filtré ; et un mélangeur, le premier microphone de l'au moins un dispositif à restitution de l'environnement sonore étant en outre configuré pour capter, dans l'oreille respective, un son du signal de bruit environnant correspondant à l'au moins un dispositif à restitution de l'environnement sonore généré par le haut-parleur de l'au moins un dispositif à restitution de l'environnement sonore, le mélangeur étant configuré pour recevoir en entrée et pour soustraire le signal de pré-sortie correspondant à l'au moins un dispositif à restitution de l'environnement sonore et le signal de bruit environnant filtré, et pour délivrer en sortie le signal de sortie correspondant à l'au moins un dispositif à restitution de l'environnement sonore, le signal de sortie correspondant à l'au moins un dispositif à restitution de l'environnement sonore étant égal au signal de pré-sortie correspondant à l'au moins un dispositif à restitution de l'environnement sonore duquel est soustrait le signal de bruit environnant filtré, et le signal de sortie correspondant à l'au moins un dispositif à restitution de l'environnement sonore étant exempt de composante de signal de bruit environnant correspondant à l'au moins un dispositif à restitution de l'environnement sonore ; pour chaque dispositif à restitution de l'environnement sonore, la fonction de transfert estimée modélisant une fonction de transfert globale entre le second sommateur et le mélangeur.

La mise en œuvre d'une restitution de l'environnement sonore permet d'éviter d'isoler l'utilisateur de son environnement acoustique, par exemple pour faciliter une conversation avec une personne à proximité qui n'utilise pas de système de communication ou pour permettre une détection plus rapide d'une alarme sonore. De préférence, les deux dispositifs de l'équipement de communication sont des dispositifs à restitution de l'environnement sonore.

La fonction de transfert estimée modélise une fonction de transfert « globale » entre le second sommateur et le mélangeur, c'est-à-dire sur tout le chemin permettant la restitution de l'environnement sonore à l'utilisateur, afin de pouvoir éliminer la restitution de l'environnement sonore au niveau du mélangeur. La fonction de transfert estimée modélise notamment un éventuel circuit électronique d'amplification de puissance de haut-parleur, le haut-parleur, la fonction de transfert acoustique dans l'oreille de l'utilisateur entre le premier microphone et le haut-parleur du dispositif correspondant, et un éventuel module d'amplification de puissance post-microphone.

Selon un mode de réalisation, l'équipement de communication comprend en outre, pour chaque dispositif à restitution de l'environnement sonore, un module de gain adaptatif permettant d'atténuer le signal de bruit environnant source de l'au moins un dispositif à restitution de l'environnement sonore avant de générer le signal de bruit environnant correspondant à l'au moins un dispositif à restitution de l'environnement sonore destiné à être transmis au haut-parleur de l'au moins un dispositif à restitution de l'environnement sonore.

L'atténuation du signal de bruit environnant permet de réduire le niveau sonore de la restitution sonore afin d'empêcher une dégradation de l'audition de l'utilisateur. Afin de favoriser l'élimination de la composante de signal de bruit environnant dans le signal de sortie d'un dispositif à restitution de l'environnement sonore, l'atténuation de signal de bruit environnant se fait, de la même manière sur le signal de bruit environnant destiné à être transmis au circuit électronique de filtrage et sur le signal de bruit environnant destiné à être transmis au haut-parleur avant toute bifurcation. Selon un mode de réalisation, l'atténuation du signal de bruit environnant source de l'au moins un dispositif à restitution de l'environnement sonore dépend d'un niveau sonore du signal de bruit environnant.

La modification de l'atténuation en fonction du niveau sonore du bruit environnant permet d'optimiser le niveau sonore de la restitution de l'environnement sonore tout en empêchant une dégradation de l'audition de l'utilisateur.

Selon un mode de réalisation, l'équipement de communication est configuré de telle sorte que l'atténuation permet que le niveau sonore du son du signal de bruit environnant correspondant à l'au moins un dispositif à restitution de l'environnement sonore généré par le haut-parleur de l'au moins un dispositif à restitution de l'environnement sonore soit toujours inférieur à une valeur seuil.

L'utilisation d'une valeur seuil permet de garantir que l'audition de l'utilisateur ne sera pas dégradée. De préférence, l'équipement de communication est configuré pour qu'un niveau sonore au niveau d'un tympan de l'utilisateur soit inférieur ou égal à 75 dBA rapporté champ libre.

Selon un mode de réalisation, au moins une opération effectuée par l'équipement de communication, sur l'au moins un signal de phonie source ou sur un signal intermédiaire entre l'au moins un signal de phonie source et le signal de sortie total, est effectuée par un processeur.

Selon un mode de réalisation, le module de traitement de signal de sortie total est mis en œuvre par au moins l'un parmi un processeur, un microcontrôleur, un microprocesseur, un processeur de signaux numériques (DSP), une matrice prédiffusée programmable (FPGA), un circuit intégré à application spécifique (ASIC). L'équipement selon l'invention est ainsi adapté pour une charge de calcul importante. Selon un mode de réalisation, au moins l'un parmi le premier dispositif et le second dispositif est une protection auditive intra-auriculaire.

L'utilisation d'une protection auditive intra-auriculaire permet d'isoler le conduit auditif de l'utilisateur vis-à-vis de l'extérieur, et ainsi d'améliorer la qualité d'utilisation de l'équipement de communication.

La présente invention a également pour objet un système de communication apte à permettre à un utilisateur de participer à une communication en duplex intégral avec au moins un interlocuteur avec une prise de son dans l'oreille pour l'utilisateur, caractérisé par le fait que le système comprend un équipement de communication tel que décrit ci-dessus pour l'utilisateur, au moins un appareil de communication utilisateur pour l'utilisateur et au moins un appareil de communication interlocuteur pour chaque interlocuteur, chaque appareil de communication utilisateur étant apte à communiquer avec au moins l'un des appareils interlocuteurs, chaque appareil de communication utilisateur étant configuré pour transmettre au moins un signal de phonie source à l'équipement de communication utilisateur, et l'équipement de communication utilisateur étant configuré pour délivrer en sortie un signal de sortie total destiné à générer au moins un signal de phonie de retour destiné à être transmis à au moins l'un des appareils de communication interlocuteurs par l'un des appareils de communication utilisateurs ; les interlocuteurs utilisant éventuellement un équipement de communication tel que décrit ci-dessus.

Selon un mode de réalisation, au moins l'un des appareils de communication est l'un parmi une radio, un talkie-walkie, un téléphone, un téléphone intelligent, une tablette numérique ou un ordinateur.

Un équipement de communication selon un mode de réalisation de la présente invention et un système de communication selon la présente invention vont maintenant être décrits à titre d'exemples non limitatifs, avec référence au dessin annexé.

Sur ce dessin :

[Fig. 1] est une représentation fonctionnelle schématique d'un équipement de communication selon la présente invention, les éléments qui permettent la restitution de l'environnement sonore sont représentés en pointillés.

[Fig. 2] est une représentation schématique d'un équipement de communication selon un mode de réalisation préféré de la présente invention.

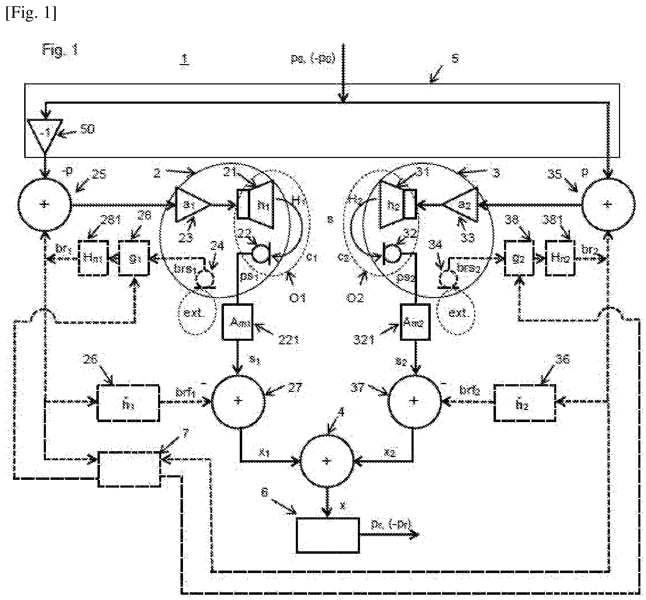

Si l'on se réfère à la Figure 1, on peut voir que l'on y a représenté un équipement de communication 1 selon la présente invention, comprenant un premier dispositif 2, un second dispositif 3, un premier sommateur 4, et un module de traitement de signal de phonie source 5. Le premier dispositif 2 est conçu pour être inséré dans une première oreille O1 d'un utilisateur et le second dispositif 3 est conçu pour être inséré dans une seconde oreille O2 de l'utilisateur. Selon le mode de réalisation représenté sur la Figure 1, la première oreille O1 correspond à l'oreille gauche et la seconde oreille O2 correspond à l'oreille droite. On comprendra qu'en variante la première oreille O1 peut être l'oreille droite et la seconde oreille O2 l'oreille gauche. De préférence, le premier dispositif 2 et le second dispositif 3 se présentent sous la forme de protections auditives intra-auriculaires, mais peuvent prendre la forme de tous types d'éléments configurés pour être introduits dans l'oreille O1, O2 d'un utilisateur, comme par exemple des oreillettes ou des écouteurs.

Le premier dispositif 2 et le second dispositif 3 comprennent chacun un haut-parleur 21, 31 et un premier microphone 22, 32 configurés pour être disposés, en utilisation, en regard d'un canal auditif respectif de l'utilisateur. Le haut-parleur 21, 31 est configuré pour générer des sons dans l'oreille respective O1, O2 et le premier microphone 22, 32 est configuré pour capter des sons dans l'oreille respective O1, O2.

Le module de traitement de signal de phonie source 5 est configuré pour recevoir un signal de phonie source $p_0$ transmis par un appareil de communication, par exemple une radio, un talkie-walkie, un téléphone, un téléphone intelligent, une tablette numérique ou un ordinateur, et pour générer, à partir du signal de phonie source $p_0$, un premier signal de phonie $-p$ et un second signal de phonie $p$ en opposition de phase, c'est-à-dire déphasé de Pi ou de 180°. Le premier signal de phonie -p est délivré au haut-parleur 21 du premier dispositif 2, et le second signal de phonie p est délivré au haut-parleur 31 du second dispositif 3.

Selon le mode de réalisation représenté sur la Figure 1, le module de traitement de signal de phonie source 5 comprend un module de déphasage 50, configuré pour déphaser de Pi, c'est-à-dire de 180°, le signal de phonie source $p_0$ reçu par l'équipement de communication 1 de manière à générer un premier signal de phonie -p destiné au premier dispositif 2, en opposition de phase par rapport au signal de phonie source $p_0$, et le module de traitement de signal de phonie source 5 est configuré pour ne pas déphaser le signal de phonie source $p_0$ afin de générer un second signal de phonie p destiné au second dispositif 3. L'homme du métier comprendra que d'autres solutions sont possibles, en variante, pour obtenir un premier signal de phonie -p et un second signal de phonie p en opposition de phase. Par exemple, le module de traitement de signal de phonie source 5 pourrait être configuré pour déphaser de Pi, c'est-à-dire de 180°, le signal de phonie source $p_0$ reçu par l'équipement de communication 1 de manière à générer un second signal de phonie, destiné au second dispositif 3, en opposition de phase par rapport au signal de phonie source $p_0$, et le module de traitement de signal de phonie source 5 serait alors configuré pour ne pas déphaser le signal de phonie source $p_0$ afin de générer un premier signal de phonie destiné au premier dispositif 2. En variante, le module de traitement de signal de phonie source 5 pourrait comprendre un premier module de déphasage configuré pour déphaser de +Pi/2, c'est-à-dire de +90°, le signal de phonie source $p_0$ reçu par l'équipement de communication 1 de manière à générer le premier signal de phonie, et le module de traitement de signal de phonie source 5 comprendrait alors un second module de déphasage (non représenté) configuré pour déphaser de -Pi/2, c'est-à-dire de -90°, le signal de phonie source $p_0$ reçu par l'équipement de communication 1 de manière à générer le second signal de phonie. En variante encore, le premier module de déphasage pourrait déphaser le signal de phonie source $p_0$ de -Pi/2 et le second module de déphasage (non représenté) pourrait déphaser le signal de phonie source $p_0$ de +Pi/2. On comprendra que d'autres combinaisons de déphasages sont possibles afin d'obtenir un premier signal de phonie -p et un second signal de phonie p en opposition de phase.

Par ailleurs, en variante du mode de réalisation représenté sur la Figure 1, l'équipement de communication 1 peut être configuré pour recevoir deux signaux de phonie sources $p_0$, $-p_0$ en opposition de phase transmis par l'appareil de communication, de telle sorte que l'un $-p_0$ des deux signaux de phonie sources $p_0$, $-p_0$ est utilisé en tant que premier signal de phonie -p et est délivré au haut-parleur 21 du premier dispositif 2, et que l'autre $p_0$ des deux signaux de phonie sources $p_0$, $-p_0$ est utilisé en tant que second signal de phonie p et est délivré au haut-parleur 31 du second dispositif 3.

L'équipement de communication 1 peut éventuellement recevoir des signaux de phonie sources $p_0$ provenant de plusieurs appareils de communication, dans ce cas le module de traitement de signal de phonie source 5 est configuré pour combiner les différents signaux de phonie sources $p_0$ reçus.

De préférence, le module de traitement de signal de phonie source 5 est configuré pour calculer un niveau sonore associé au signal de phonie source $p_0$. De préférence encore, le module de traitement de signal de phonie source 5 est configuré pour permettre un ajustement adaptatif du gain du signal de phonie source $p_0$ avant de générer les signaux de phonie -p, p, de préférence en fonction d'un niveau sonore calculé du signal de phonie source $p_0$.

Le haut-parleur 21 du premier dispositif 2 est configuré pour générer au moins un son du premier signal de phonie -p, et le haut-parleur 31 de second dispositif 3 est configuré pour générer au moins un son du second signal de phonie p.

De préférence, le premier haut-parleur 21 et le second haut-parleur 31 comprennent chacun un circuit électronique d'amplification de puissance de haut-parleur 23, 33, par exemple un amplificateur, configuré pour ajuster une amplification de puissance du signal entrant dans le haut-parleur 21, 31 correspondant.

De préférence, les haut-parleurs 21, 31 des deux dispositifs 2, 3 sont identiques. De préférence encore, les amplifications de puissance des circuits électroniques d'amplification de puissance de haut-parleur 23, 33 sont identiques pour les deux haut-parleurs 21, 31. On comprendra que si les haut-parleurs 21, 31 sont différents, les amplifications de puissance sont, de préférence, ajustées pour qu'un même signal génère un même son pour chaque haut-parleur 21, 31.

Le premier microphone 22 du premier dispositif 2 est configuré pour au moins capter, dans la première oreille O1 de l'utilisateur, une voix s de l'utilisateur et le son du premier signal de phonie -p généré par le haut-parleur 21 du premier dispositif 2 afin de délivrer en sortie un signal de prise de son $ps_1$ du premier dispositif 2. Le premier microphone 32 du second dispositif 3 est configuré pour au moins capter, dans la seconde oreille O2 de l'utilisateur, la voix s de l'utilisateur et le son du second signal de phonie p généré par le haut-parleur 31 du second dispositif 3, afin de délivrer en sortie un signal de prise de son $ps_2$ du second dispositif 3.

De préférence, l'équipement de communication 1 comprend un module d'amplification de puissance post-microphone 221, 321 pour chaque dispositif 2, 3, configuré pour ajuster, respectivement, une amplification de puissance du signal de prise de son $ps_4$ du premier dispositif 2 et du signal de prise de son $ps_2$ du second dispositif 3, afin de générer des signaux de pré-sortie $s_1$, $s_2$ correspondant, respectivement, au premier dispositif 2 et au second dispositif 3.

On comprendra que si l'équipement de communication 1 ne comprend pas de module d'amplification de puissance post-microphone 221, 321, alors le signal de pré-sortie $s_1$, $s_2$ est égal au signal de prise de son $ps_1$, $ps_2$.

De préférence, les premiers microphones 22, 32 des deux dispositifs 2, 3 sont identiques. De préférence encore, les amplifications de puissance des modules d'amplification de puissance post-microphone 221, 321 sont identiques pour les deux signaux de prise de son $ps_1$, $ps_2$. On comprendra que si les premiers microphones 22, 32 des deux dispositifs 2, 3 sont différents, les amplifications de puissance sont, de préférence, ajustées pour qu'un même son génère un même signal de pré-sortie $s_1$, $s_2$ correspondant, respectivement, au premier dispositif 2 et au second dispositif 3.

Par ailleurs, dans la pratique il peut arriver que la première oreille O1 de l'utilisateur et la seconde oreille O2 de l'utilisateur aient des caractéristiques différentes. Dans ce cas on comprendra que, de préférence, les amplifications de puissance des circuits électroniques d'amplification de puissance de haut-parleur 23, 33 et des modules d'amplification de puissance post-microphone 221, 321 sont ajustées de manière à ce que l'équipement de communication 1 soit configuré de telle sorte que, pour chaque dispositif 2, 3, un même « premier signal » entrant dans le haut-parleur 21, 31 génère un même signal de pré-sortie $s_1$, $s_2$.

En particulier, si on note $h_1$, respectivement $h_2$, la fonction de transfert du haut-parleur 21 du premier dispositif 2, respectivement la fonction de transfert du haut-parleur 31 du second dispositif 3, $a_1$, respectivement $a_2$, l'amplification de puissance d'un éventuel circuit électronique d'amplification de puissance de haut-parleur 23 du haut-parleur 21 du premier dispositif 2, respectivement l'amplification de puissance d'un éventuel circuit électronique d'amplification de puissance de haut-parleur 33 du haut-parleur 31 du second dispositif 3, $H_1$, respectivement $H_2$, la fonction de transfert acoustique dans la première oreille O1 entre le premier microphone 22 et le haut-parleur 21, respectivement la fonction de transfert acoustique dans la seconde oreille O2 entre le premier microphone 32 et le haut-parleur 31, et $A_{m1}$, respectivement $A_{m2}$, l'amplification de puissance d'un éventuel module d'amplification de puissance 221 associé au premier dispositif 2, respectivement l'amplification de puissance d'un éventuel module d'amplification de puissance 321 associé au second dispositif 3, alors, de préférence $a_1$, $A_{m1}$, $a_2$ et $A_{m2}$ sont ajustés pour que $h_1 \times a_1 \times H_1 \times A_{m1} = h_2 \times a_2 \times H_2 \times A_{m2} = h \times a \times H \times A_m$.

L'équipement de communication 1 est configuré pour générer un signal de sortie $x_1$ correspondant au premier dispositif 2, et un signal de sortie $x_2$ correspondant au second dispositif 3. Par ailleurs, le premier sommateur 4 est configuré pour sommer le signal de sortie $x_1$ correspondant au premier dispositif 2 et le signal de sortie $x_2$ correspondant au second dispositif 3 afin d'obtenir un signal de sortie total $x$.

On peut préciser que sans restitution de l'environnement sonore, le signal de sortie $x_1$ correspondant au premier dispositif 2 est égal au signal de pré-sortie $s_1$ correspondant au premier dispositif 2, et le signal de sortie $x_2$ correspondant au second dispositif 3 est égal au signal de pré-sortie $s_2$ correspondant au second dispositif 3. Ceci est différent dans le cas d'une restitution de l'environnement sonore et cette configuration sera décrite en détail plus tard.

Si l'on se réfère à la Figure 1, on peut illustrer mathématiquement le principe de fonctionnement de l'invention, sans restitution de l'environnement sonore, en notant $c_1$ la fonction de transfert de la conduction osseuse parleur pour la première oreille O1 de l'utilisateur, $c_2$ la fonction de transfert de la conduction osseuse parleur pour la seconde oreille O2 de l'utilisateur, on a alors :

$$x = x_1 + x_2 = s_1 + s_2$$

soit, $x = ps_1 \times A_{m1} + ps_2 \times A_{m2}$
soit, $x = (s \times c_1 - p \times h_1 \times a_1) \times H_1 \times A_{m1} + (s \times c_2 + p \times h_2 \times a_2) \times H_2 \times A_{m2}$
soit, $x = s \times (c_1 \times H_1 \times A_{m1} + c_2 \times H_2 \times A_{m2}) - p \times (h_1 \times a_1 \times H_1 \times A_{m1}) + p \times (h_2 \times a_2 \times H_2 \times A_{m2})$

Dans un cas théorique, on peut supposer que la conduction osseuse parleur et que la fonction de transfert acoustique sont identiques pour la première et la seconde oreille O1, O2, c'est-à-dire que $c_1 = c_2 = c$ et que $H_1 = H_2 = H$, puisque la tête de l'utilisateur est symétrique, que les fonctions de transfert des haut-parleurs 21, 31 sont identiques, c'est-à-dire que $h_1 = h_2 = h$, puisque les haut-parleurs 21, 31 sont identiques, et que les amplifications de puissance sont identiques, c'est-à-dire que $a_1 = a_2 = a$ et $A_{m1} = A_{m2} = A_m$.

On obtient alors $x = 2 \times s \times c \times H \times A_m$.

Dans la pratique, il peut arriver que les haut-parleurs 21, 31 ou les premiers microphones 22, 32 ne soient pas strictement identiques ou bien que les caractéristiques des oreilles droite et gauche de l'utilisateur soient légèrement différentes. Dans ce cas, l'équipement de communication 1 est, de préférence, configuré pour compenser ces différences, par exemple par un léger ajustement des amplifications de puissance des circuits électroniques d'amplification de puissance de haut-parleur 23, 33 et des modules d'amplification de puissance post-microphone 221, 321, de telle sorte que $h_1 \times a_1 \times H_1 \times A_{m1} = h_2 \times a_2 \times H_2 \times A_{m2} = h \times a \times H \times A_m$. En reprenant l'équation ci-dessus on obtient donc :

$$x = s \times (c_1 \times H_1 \times A_{m1} + c_2 \times H_2 \times A_{m2})$$

$$\text{ou } x = s \times H_1 \times A_{m1} \times (c_1 + c_2 \times \frac{h_1 \times a_1}{h_2 \times a_2}).$$

Ainsi, le signal de sortie total est bien exempt de composante des signaux de phonie -p, p, de telle sorte que l'équipement de communication 1 permet une fonction anti-écho.

Dans le cas d'une prise de son dans l'oreille, en raison de l'effet d'occlusion et de la transmission osseuse, la voix s, c'est-à-dire le signal de parole, de l'utilisateur est fortement amplifiée dans le domaine des basses fréquences, notamment inférieures à 500 Hz. De préférence, le signal de sortie total x est donc traité avant d'être transmis à un appareil de communication, à l'aide d'un module de traitement de signal de sortie total 6, afin de diminuer l'effet d'occlusion et l'effet de la transmission osseuse pour rendre le son de la voix s de l'utilisateur plus naturel pour l'interlocuteur, et améliorer ainsi la qualité et l'intelligibilité de la parole. Ces traitements sont déjà connus, par exemple par les travaux suivants Elliott H. Berger, Ronald W. Kieper, Dan Gauger, « Hearing protection: Surpassing the limits to attenuation imposed by the bone-conduction pathways » (Protection auditive : surmonter les limites de l'atténuation imposée par les trajets de conduction osseuse) J. Acoust. Soc. Am., Vol. 114, No. 4, Pt. 1, October 2003, et ne seront pas détaillés ici.

Le module de traitement de signal de sortie total 6 peut éventuellement également comprendre un module d'amplification.

Comme représenté sur la Figure 1, l'équipement de communication 1 peut en outre comprendre une fonction de restitution de l'environnement sonore. Selon le mode de réalisation représenté sur la Figure 1, chaque dispositif 2, 3 comprend en outre un second microphone 24, 34, et l'équipement de communication 1 comprend en outre, pour chaque dispositif 2, 3, un second sommateur 25, 35, un module de filtrage 26, 36 et un mélangeur 27, 37, respectivement.

Les seconds microphones 24, 34 sont disposés sur une surface externe du dispositif 2, 3 correspondant et sont dirigés, en utilisation, vers l'extérieur. Les seconds microphones 24, 34 sont configurés pour capter des sons à l'extérieur ext de l'équipement de communication 1, notamment un bruit environnant, et pour délivrer en sortie un signal de bruit environnant source $brs_1$ de premier dispositif 2 et un signal de bruit environnant source $brs_2$ de second dispositif 3.

Pour une restitution de l'environnement sonore, le second sommateur 25 associé au premier dispositif 2 est configuré pour recevoir en entrée le premier signal de phonie -p et un signal de bruit environnant $br_1$ correspondant au premier dispositif 2, le signal de bruit environnant $br_1$ correspond au signal de bruit environnant source $brs_1$ de premier dispositif 2 éventuellement ajusté en gain et corrigé comme cela sera détaillé plus tard, et pour délivrer la somme de ces deux signaux au haut-parleur 21 du premier dispositif 2. De même, le second sommateur 35 associé au second dispositif 3 est configuré pour recevoir en entrée le second signal de phonie p et un signal de bruit environnant $br_1$ correspondant au second dispositif 3, le signal de bruit environnant $br_2$ correspond au signal de bruit environnant source $brs_2$ de second dispositif 3 éventuellement ajusté en gain et corrigé comme cela sera détaillé plus tard, et pour délivrer la somme de ces deux signaux au haut-parleur 31 du second dispositif 3.

Dans le cas d'une restitution de l'environnement sonore, les haut-parleurs 21, 31 sont configurés pour, en outre, générer un son du signal de bruit environnant $br_1$, $br_2$ et les premiers microphones 22, 32 sont configurés pour, en outre, capter dans l'oreille respective O1, O2 le son du signal de bruit environnant $br_1$, $br_2$ généré par le haut-parleur 21, 31 correspondant.

Le module de filtrage 26, 36 associé à chaque dispositif 2, 3 est configuré pour recevoir en entrée le signal de bruit environnant $br_1$, $br_2$ correspondant audit dispositif 2, 3, et pour délivrer en sortie un signal de bruit environnant filtré $brf_1$, $brf_2$. Le filtrage est effectué par une fonction de transfert estimée $\hat{h}_1$, $\hat{h}_2$ modélisant une fonction de transfert « globale » entre le second sommateur 25 associé au premier dispositif 2, respectivement le second sommateur 35 associé au second dispositif 3, et le mélangeur 27 associé au premier dispositif 2, respectivement le mélangeur 37 associé au second dispositif 3. Ladite fonction de transfert « globale » modélise donc, de préférence, le circuit électronique d'amplification de puissance de haut-parleur 23 du haut-parleur 21 du premier dispositif 2, respectivement le circuit électronique d'amplification de puissance de haut-parleur 33 du haut-parleur 31 du second dispositif 3, le haut-parleur 21 du premier dispositif 2, respectivement le haut-parleur 31 du second dispositif 3, la fonction de transfert acoustique dans l'oreille O1, O2 de l'utilisateur entre le premier microphone 22 du premier dispositif 2, respectivement le premier microphone 32 du second dispositif 3, et le haut-parleur 21 du premier dispositif 2, respectivement le haut-parleur 31 du second dispositif 3, et le module d'amplification de puissance post-microphone 221 associé au premier dispositif 2, respectivement le module d'amplification de puissance post-microphone 321 associé au second dispositif 3.

Pour chaque module de filtrage 26, 36, la fonction de transfert estimée $\hat{h}_1$, $\hat{h}_2$ est déterminée à l'avance, de préférence en fonction des caractéristiques du dispositif 2, 3 associé, par exemple en fonction du type de protection intra-auriculaire, et des caractéristiques de l'oreille O1, O2 correspondante de l'utilisateur, par exemple en fonction des caractéristiques du conduit auditif et du tympan. La fonction de transfert estimée $\hat{h}_1$ du module de filtrage 26 associé au premier dispositif 2 peut éventuellement être différente de la fonction de transfert estimée $\hat{h}_2$ du module de filtrage 36 associé au second dispositif 3.

Le mélangeur 27 associé au premier dispositif 2, respectivement le mélangeur 37 associé au second dispositif 3, est configuré pour recevoir en entrée le signal de pré-sortie $s_1$ correspondant au premier dispositif 2, respectivement le signal de pré-sortie $s_2$ correspondant au second dispositif 3, pour y soustraire le signal de bruit environnant filtré $brf_1$ par le module de filtrage 26 associé au premier dispositif 2, respectivement le signal de bruit environnant filtré $brf_2$ par le module de filtrage 36 associé au second dispositif 3, et pour délivrer en sortie le signal de sortie $x_1$ correspondant au premier

dispositif 2, respectivement le signal de sortie $x_2$ correspondant au second dispositif 3.

De préférence, l'équipement de communication 1 comprend en outre, pour chaque dispositif 2, 3, un module de gain adaptatif 28, 38, associé. Le module de gain adaptatif 28, 38 est configuré pour permettre un ajustement adaptatif du gain (au maximum égal à 1) du signal de bruit environnant source $brs_1$, $brs_2$, afin de permettre, respectivement, une atténuation du signal de bruit environnant source $brs_1$ de premier dispositif 2 et du signal de bruit environnant source $brs_2$ de second dispositif 3, avant de générer, respectivement, le signal de bruit environnant $br_1$ correspondant au premier dispositif 2 et le signal de bruit environnant $br_2$ correspondant au second dispositif 3. Comme représenté sur la Figure 1, l'équipement de communication 1 est configuré de telle sorte que l'atténuation de signal de bruit environnant source $brs_1$, $brs_2$ est faite, de préférence, de la même manière sur le signal de bruit environnant $br_1$, $br_2$ destiné à être transmis au module de filtrage 26, 36 et sur le signal de bruit environnant $br_1$, $br_2$ destiné à être transmis au haut-parleur 21, 31.

De préférence, l'équipement de communication 1 comprend en outre un module de calcul de niveau sonore 7 configuré pour mesurer un niveau sonore de bruit environnant sur la base du signal de bruit environnant $br_1$ correspondant au premier dispositif 2 et du signal de bruit environnant $br_2$ correspondant au second dispositif 3, par exemple en effectuant une moyenne des niveaux sonores mesurés pour chacun des deux signaux $br_1$, $br_2$. De préférence encore, l'équipement de communication 1 est configuré pour définir un gain $g_1$, $g_2$ des modules de gain adaptatif 28, 38 en fonction du niveau sonore calculé par le module de calcul de niveau sonore 7.

De préférence toujours, les modules de gain adaptatif 28, 38 sont identiques, et le gain $g_1$ du module de gain adaptatif 28 associé au premier dispositif 2 est égal au gain $g_2$ du module de gain adaptatif 38 associé au second dispositif 3, afin de garantir une bonne perception de l'environnement sonore.

De préférence, chaque module de gain adaptatif 28, 38 est configuré pour que le niveau sonore de chaque son de signal de bruit environnant $br_1$, $br_2$ généré par le haut-parleur 21, 31 soit inférieur ou égal à une valeur seuil. De préférence la valeur seuil est d'au maximum 75 dBA rapporté champs libre.

De préférence encore, l'équipement de communication 1 comprend en outre, pour chaque dispositif 2, 3, un module de correction 281, 381, associé, situé en aval du module de gain adaptatif 28, 38, associé.

Le module de correction 281, 381 est configuré pour permettre une correction du signal de bruit environnant source $brs_1$, $brs_2$ ajusté en gain, avant de générer le signal de bruit environnant $br_1$, $br_2$, afin de permettre, respectivement, une correction du signal de bruit environnant source $brs_1$ de premier dispositif 2 ajusté en gain, et du signal de bruit environnant source $brs_2$ de second dispositif 3 ajusté en gain. Le module de correction 281, 381 est déterminé afin d'obtenir une perte d'insertion plate dans le domaine fréquentiel [100 Hz - 6kHz], c'est-à-dire qu'avec ou sans protection, le bruit environnant de faible niveau devrait être identique dans ce domaine fréquentiel. La correction du signal de bruit environnant source $brs_1$, $brs_2$ permet notamment de fournir à l'utilisateur un ressenti d'une oreille ouverte, c'est-à-dire un ressenti similaire au ressenti sans dispositif 2, 3 disposé dans l'oreille O1, O2, et de permettre une écoute plus naturelle pour l'utilisateur lorsque le son du signal de bruit environnant $br_1$, $br_2$ est généré par le haut-parleur 21, 31 du dispositif 2, 3 associé. Comme représenté sur la Figure 1, l'équipement de communication 1 est configuré de telle sorte que la correction est faite, de préférence, de la même manière pour le signal de bruit environnant $br_1$, $br_2$ destiné à être transmis au module de filtrage 26, 36, et sur le signal de bruit environnant $br_1$, $br_2$ destiné à être transmis au haut-parleur 21, 31.

Afin de favoriser une restitution de l'environnement sonore homogène et naturelle entre les deux oreilles de l'utilisateur, si on note $H_{n1}$, respectivement $H_{n2}$, la fonction de transfert d'un module de correction 281 associé au premier dispositif 2, respectivement d'un module de correction 381 associé au second dispositif 3, alors, de préférence, $H_{n1}$, $g_1$, $a_1$, $H_{n2}$, $g_2$ et $a_2$ sont ajustés pour que $h_1 \times H_{n1} \times g_1 \times a_1 = h_2 \times H_{n2} \times g_2 \times a_2$.

L'homme du métier comprendra qu'en variante du mode de réalisation représenté sur la Figure 1, la restitution de l'environnement sonore peut aussi être mise en œuvre uniquement pour le premier dispositif 2 ou uniquement pour le second dispositif 3.

Si l'on se réfère à la Figure 1, on peut illustrer mathématiquement le principe de fonctionnement de l'invention, avec restitution de l'environnement sonore, on a alors :

$$x = x_1 + x_2$$

Avec, $x_1 = s_1 - brf_1 = ps_1 \times A_{m1} - br_1 \times \hat{h}_1$

et $x_2 = s_2 - brf_2 = ps_2 \times A_{m2} - br_2 \times \hat{h}_2$
soit $x_1 = (s \times c_1 + (br_1 - p) \times h_1 \times a_1) \times H_1 \times A_{m1} - br_1 \times \hat{h}_1$
et $x_2 = (s \times c_2 + (br_2 + p) \times h_2 \times a_2) \times H_2 \times A_{m2} - br_2 \times \hat{h}_2$

Dans un cas théorique, on peut supposer que la conduction osseuse parleur et que la fonction de transfert acoustique sont identiques pour la première et la seconde oreille O1, O2, c'est-à-dire que $c_1=c_2=c$ et que $H_1=H_2=H$, puisque la tête de l'utilisateur est symétrique, que les fonctions de transfert des haut-parleurs 21, 31 sont identiques, c'est-à-dire que $h_1=h_2=h$, puisque les haut-parleurs 21, 31 sont identiques, que les amplifications de puissance sont identiques, c'est-à-dire que $a_1=a_2=a$ et $A_{m1}=A_{m2}=A_m$, et que les fonctions de transfert estimées sont identiques, c'est-à-dire que $\hat{h}_1=\hat{h}_2=\hat{h}$, puisque les premier 2 et second 3 dispositifs et les première O1 et seconde O2 oreilles sont identiques. Par ailleurs, on peut considérer que les fonctions de transfert estimées correspondent aux fonctions de transfert « réelles », c'est-à-dire que $\hat{h} = h \times a \times H \times A_m$.

On obtient alors

$$x_1 = (s \times c + (br_1 - p) \times h \times a) \times H \times A_m - br_1 \times h \times a \times H \times A_m$$

et $x_2 =(s \times c + (br_2 + p) \times h \times a) \times H \times A_m - br_2 \times h \times a \times H \times A_m$
soit $x = 2 \times s \times c \times H \times A_m$.

Dans la pratique, il peut arriver que les haut-parleurs 21, 31 ou les premiers microphones 22, 32 ne soient pas strictement identiques ou bien que les caractéristiques des oreilles droite et gauche de l'utilisateur soient légèrement différentes. Dans ce cas, l'équipement de communication 1 est, de préférence, configuré pour compenser ces différences, par exemple par un léger ajustement des amplifications de puissance des circuits électroniques d'amplification de puissance de haut-parleur 23, 33 et des modules d'amplification de puissance post-microphone 221, 321, de telle sorte que $h_1 \times a_1 \times H_1 \times A_{m1} = h_2 \times a_2 \times H_2 \times A_{m2} = h \times a \times H \times A_m$. Par ailleurs, en raison de la modélisation, il existe souvent une erreur e entre les fonctions de transfert estimées et les fonctions de transfert « réelles », c'est-à-dire que $\hat{h} = h \times a \times H \times A_m + e$.

En reprenant les équations ci-dessus, on obtient donc :

$$x_1 = s \times c_1 \times H_1 \times A_{m1} + (br_1 - p) \times h \times a \times H \times A_m - br_1 \times (h \times a \times H \times A_m + e)$$

et $x_2 = s \times c_2 \times H_2 \times A_{m2} + (br_2 + p) \times h \times a \times H \times A_m - br_2 \times (h \times a \times H \times A_m + e)$
soit $x = s \times (c_1 \times H_1 \times A_{m1} + c_2 \times H_2 \times A_{m2}) - (br_1 + br_2) \times e$

ou $x = s \times H_1 \times A_{m1} \times (c_1 + c_2 \times \frac{h_1 \times a_1}{h_2 \times a_2}) - (br_1 + br_2) \times e$

Ainsi, le signal de sortie total x est bien exempt de composante des signaux de phonie -p, p, de telle sorte que l'équipement de communication 1 permet une fonction anti-écho, et la restitution de l'environnement sonore envoyée à l'interlocuteur est réduite au minimum, dans la mesure où l'erreur e est faible. Comme évoqué plus haut, dans le cas d'une prise de son dans l'oreille, en raison de l'effet d'occlusion et de la transmission osseuse, la voix s, c'est-à-dire le signal de parole, de l'utilisateur est fortement amplifiée dans le domaine des basses fréquences, notamment inférieures à 500 Hz. De préférence, le signal de sortie total x est donc traité avant d'être transmis à un appareil de communication, à l'aide du module de traitement de signal de sortie total 6, afin de diminuer l'effet d'occlusion et l'effet de la transmission osseuse pour rendre le son de la voix s de l'utilisateur plus naturel pour l'interlocuteur, et améliorer ainsi la qualité et l'intelligibilité de la parole. Ces traitements sont déjà connus, par exemple par la publication scientifique indiquée précédemment « Hearing protection: Surpassing the limits to attenuation imposed by the bone-conduction pathways », et ne seront pas détaillés ici.

Le module de traitement de signal de sortie total 6 peut éventuellement également comprendre un module d'amplification.

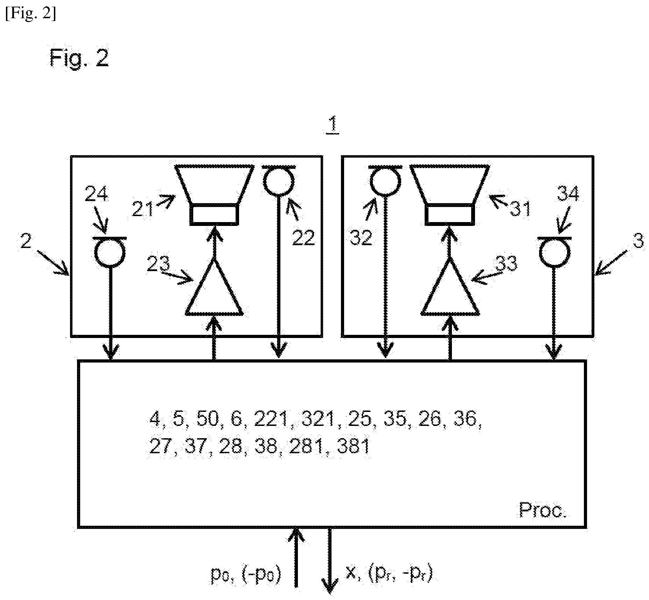

La Figure 2 représente de manière schématique un équipement de communication 1 selon un mode de réalisation préféré de l'invention. On peut voir sur la Figure 2 qu'une grande partie des opérations effectuées, représentées de manière fonctionnelle sur la Figure 1, sur des signaux intermédiaires, c'est-à-dire des signaux utilisés par l'équipement de communication 1 entre l'au moins un signal de phonie source et le signal de sortie total et entre le signal de sortie total et l'au moins un signal de phonie de retour, sont effectuées par un processeur Proc.

Ainsi, le premier sommateur 4, les seconds sommateurs 25, 35 et les mélangeurs 27, 37 sont, de préférence, mis en œuvre par un processeur programmé pour réaliser ces fonctions. On comprendra cependant qu'en variante, le premier sommateur 4, les seconds sommateurs 25, 35 et les mélangeurs 27, 37 pourraient également être mis en œuvre par plusieurs processeurs ou par un ou plusieurs circuits électroniques, notamment un microcontrôleur, un microprocesseur, un processeur de signaux numériques (DSP), une matrice prédiffusée programmable (FPGA) ou encore un circuit intégré à application spécifique (ASIC).

Par ailleurs, les modules, notamment le module de traitement de signal de phonie source 5, le module de déphasage 50, le module de traitement de signal de sortie total 6, les modules d'amplification de puissance post-microphone 221, 321, les modules de filtrage 26, 36, les modules de gain adaptatif 28, 38, les modules de correction 281, 381, et le module de calcul de niveau sonore 7, sont, de préférence, mis en œuvre par un processeur programmé pour réaliser ces fonctions. On comprendra cependant qu'en variante les modules pourraient être mis en œuvre par plusieurs processeurs ou par un ou plusieurs circuits électroniques, notamment un microcontrôleur, un microprocesseur, un processeur de signaux numériques (DSP), une matrice prédiffusée programmable (FPGA) ou encore un circuit intégré à application spécifique (ASIC).

En variante du mode de réalisation décrit ci-dessus, on comprendra que les circuits électroniques d'amplification de puissance de haut-parleur 23, 33 des haut-parleurs 21, 31 pourraient aussi, en variante, être mis en œuvre par un ou plusieurs processeurs, ou plusieurs circuits de type microcontrôleur, microprocesseur, processeur de signaux numériques (DSP), matrice prédiffusée programmable (FPGA) ou encore circuit intégré à application spécifique (ASIC).

L'équipement de communication est alimenté par au moins l'un parmi une batterie intégrée, une batterie déportée (alimentation filaire).

Un équipement de communication 1 selon l'invention permet en outre la mise en place d'un système de communication apte à permettre à un utilisateur de participer à une communication en duplex intégral avec au moins un interlocuteur avec une prise de son dans l'oreille pour l'utilisateur. Un tel système comprend un équipement de communication 1 selon l'invention pour l'utilisateur, au moins un appareil de communication utilisateur pour l'utilisateur et au moins un appareil de communication interlocuteur pour chaque interlocuteur. Chaque appareil de communication utilisateur est apte à communiquer avec au moins l'un des appareils interlocuteurs, chaque appareil de communication utilisateur est configuré pour transmettre au moins un signal de phonie source $p_0$, $-p_0$ à l'équipement de communication 1 utilisateur, et l'équipement de communication 1 utilisateur est configuré pour délivrer en sortie un signal de sortie total x destiné à générer au moins un signal de phonie de retour $p_r$, $-p_r$ destiné à être transmis à au moins l'un des appareils de communication interlocuteurs par l'un des appareils de communication utilisateurs. De préférence, les interlocuteurs utilisent également un équipement de communication 1 selon l'invention.

Les appareils de communication sont par exemples choisi parmi une radio, un talkie-walkie, un téléphone, un téléphone intelligent, une tablette numérique et un ordinateur.]

## Revendications

**1.** Équipement de communication (1) permettant un duplex intégral avec une prise de son dans l'oreille, l'équipement de communication (1) étant configuré pour recevoir au moins un signal de phonie source ($p_0$, $-p_0$) transmis par au moins un appareil de communication et pour fournir un signal de sortie total (x), l'équipement de communication (1) comprenant :

- un premier dispositif (2) conçu pour être inséré dans l'une (O1) parmi une oreille droite et une oreille gauche d'un utilisateur, et
- un second dispositif (3) conçu pour être inséré dans l'autre (O2) parmi l'oreille droite et l'oreille gauche de l'utilisateur ;
- chacun parmi le premier dispositif (2) et le second dispositif (3) comprenant un premier microphone (22, 32) et un haut-parleur (21, 31) configurés pour être disposés, en utilisation, en regard d'un canal auditif de l'utilisateur ;

**caractérisé par le fait que** :

- l'équipement de communication (1) est configuré de telle sorte qu'un premier signal de phonie (-p) est délivré au haut-parleur (21) du premier dispositif (2) et qu'un second signal de phonie (p) est délivré au haut-parleur (31) du second dispositif (3), les premier (-p) et second (p) signaux de phonie étant basés sur l'au moins un signal de phonie source ($p_0$, $-p_0$) de telle sorte que le premier signal de phonie (-p) et le second signal de phonie (p) sont en opposition de phase, c'est-à-dire déphasés de Pi ;
- le premier microphone (22, 32) du premier (2), respectivement du second (3), dispositif est configuré pour capter, dans l'oreille respective (O1, O2), au moins une voix (s) de l'utilisateur et un son du premier (-p), respectivement du second (p), signal de phonie généré par le haut-parleur (21, 31) du premier (2), respectivement du second (3), dispositif, et pour délivrer en sortie un signal de prise de son ($ps_1$, $ps_2$) du premier (2), respectivement du second (3), dispositif ;
- l'équipement de communication (1) est configuré pour générer un signal de pré-sortie ($s_1$) correspondant au premier dispositif (2) et un signal de pré-sortie ($s_2$) correspondant au second dispositif (3), respectivement à partir du signal de prise de son ($ps_1$, $ps_2$) du premier (2) et du second (3) dispositif, et pour générer un signal de sortie ($x_1$) correspondant au premier dispositif (2) et un signal de sortie ($x_2$) correspondant au second dispositif (3), comprenant respectivement, au moins une composante liée au signal de pré-sortie ($s_1$) correspondant au premier dispositif (2) et une composante liée au signal de pré-sortie ($s_2$) correspondant au second dispositif (3) ; et
- l'équipement de communication (1) comprend en outre un premier sommateur (4) configuré pour recevoir en entrée et pour sommer le signal de sortie ($x_1$) du premier dispositif (2) et le signal de sortie ($x_2$) du second dispositif

(3), le premier sommateur (4) délivrant en sortie le signal de sortie total (x) égal à la somme du signal de sortie ($x_1$) du premier dispositif (2) et du signal de sortie ($x_2$) du second dispositif (3), et le signal de sortie total (x) comprenant une composante de voix (s) de l'utilisateur et étant exempt de composante des premier et second signaux de phonie (-p, p).

2. Équipement de communication (1) selon la revendication 1, **caractérisé par le fait que** l'équipement de communication (1) comprend en outre un module de traitement de signal de sortie total (6) configuré pour traiter le signal de sortie total (x) afin de générer, à partir du signal de sortie total (x), au moins l'un parmi un signal de phonie de retour ($p_r$, $-p_r$) et deux signaux de phonie de retour ($p_r$, $-p_r$) en opposition de phase, le traitement étant au moins l'un parmi une diminution de l'effet d'occlusion, une diminution de l'effet de la transmission osseuse, et une amplification, afin de rendre le signal de sortie total (x) plus naturel pour l'interlocuteur.

3. Équipement de communication (1) selon l'une quelconque des revendications 1 et 2, **caractérisé par le fait que** l'équipement de communication (1) est configuré pour recevoir deux signaux de phonie sources ($p_0$, $-p_0$) en opposition de phase en provenance de chaque appareil de communication, pour utiliser l'un ($-p_0$) des deux signaux de phonie sources ($p_0$, $-p_0$) afin de générer le premier signal de phonie (-p) et le délivrer au haut-parleur (21) du premier dispositif (2), et pour utiliser l'autre ($p_0$) des deux signaux de phonie sources ($p_0$, $-p_0$) afin de générer le second signal de phonie (p) et le délivrer au haut-parleur (31) du second dispositif (3).

4. Équipement de communication (1) selon l'une quelconque des revendications 1 et 2, **caractérisé par le fait que** l'équipement de communication (1) comprend un module de traitement de signal de phonie source (5) configuré pour recevoir un seul signal de phonie source ($p_0$) en provenance de chaque appareil de communication et pour générer le premier signal de phonie (-p) et le second signal de phonie (p) en opposition de phase à partir de l'au moins un signal de phonie source ($p_0$).

5. Équipement de communication (1) selon la revendication 4, **caractérisé par le fait que** l'équipement de communication (1) est configuré pour déphaser de Pi l'au moins un signal de phonie source ($p_0$) afin de générer le premier signal de phonie (-p), et pour ne pas déphaser le signal de phonie source ($p_0$) afin de générer le second signal de phonie (p).

6. Équipement de communication (1) selon l'une quelconque des revendications 1 à 5, **caractérisé par le fait qu'**au moins un dispositif, désigné dispositif à restitution de l'environnement sonore, parmi le premier dispositif (2) et le second dispositif (3) comprend un second microphone (24, 34), disposé sur une surface externe de l'au moins un dispositif à restitution de l'environnement sonore et dirigé vers l'extérieur, le second microphone (24, 34) étant configuré pour capter un bruit environnant et délivrer en sortie un signal de bruit environnant source ($brs_1$, $brs_2$) de l'au moins un dispositif à restitution de l'environnement sonore ; l'équipement de communication étant configuré pour générer un signal de bruit environnant ($br_1$, $br_2$) correspondant à l'au moins un dispositif à restitution de l'environnement sonore à partir du signal de bruit environnant source ($brs_1$, $brs_2$) ;

l'équipement de communication (1) comprend en outre, pour chaque dispositif à restitution de l'environnement sonore :

- un second sommateur (25, 35) configuré pour recevoir en entrée et pour sommer le signal de bruit environnant ($br_1$, $br_2$) correspondant à l'au moins un dispositif à restitution de l'environnement sonore et le signal de phonie (-p, p) configuré pour être délivré au haut-parleur (21, 31) de l'au moins un dispositif à restitution de l'environnement sonore, et pour délivrer en sortie la somme au haut-parleur (21, 31) de l'au moins un dispositif à restitution de l'environnement sonore ;
- un module de filtrage (26, 36), relié au second microphone (24, 34) configuré pour recevoir le signal de bruit environnant ($br_1$, $br_2$) correspondant à l'au moins un dispositif à restitution de l'environnement sonore, pour filtrer le signal de bruit environnant ($br_1$, $br_2$) correspondant à l'au moins un dispositif à restitution de l'environnement sonore par une fonction de transfert estimée ($\hat{h}_1$, $\hat{h}_2$), et pour délivrer en sortie un signal de bruit environnant filtré ($brf_1$, $brf_2$) ; et
- un mélangeur (27, 37), le premier microphone (22, 32) de l'au moins un dispositif à restitution de l'environnement sonore étant en outre configuré pour capter, dans l'oreille respective (O1, O2), un son du signal de bruit environnant ($br_1$, $br_2$) correspondant à l'au moins un dispositif à restitution de l'environnement sonore généré par le haut-parleur (21, 31) de l'au moins un dispositif à restitution de l'environnement sonore, le mélangeur (27, 37) étant configuré pour recevoir en entrée et pour soustraire le signal de pré-sortie ($s_1$, $s_2$) correspondant à l'au moins un dispositif à restitution de l'environnement sonore et le signal de bruit environnant filtré ($brf_1$, $brf_2$), et pour délivrer en sortie le signal de sortie ($x_1$, $x_2$) correspondant à l'au moins un dispositif à restitution de l'environnement sonore, le signal de sortie ($x_1$, $x_2$) correspondant à l'au moins un dispositif à restitution de l'environnement sonore étant égal au signal de pré-sortie ($s_1$, $s_2$) correspondant à l'au moins un dispositif à restitution de l'environnement sonore duquel est soustrait le signal de bruit environnant filtré ($brf_1$, $brf_2$), et le signal de sortie ($x_1$, $x_2$) correspondant à l'au moins un dispositif à restitution de l'environnement sonore étant exempt de composante de signal de bruit environnant ($br_1$, $br_2$) correspondant à l'au moins un dispositif à restitution de l'environnement sonore ;

pour chaque dispositif à restitution de l'environnement sonore, la fonction de transfert estimée ($\hat{h}_1$, $\hat{h}_2$) modélisant une fonction de transfert globale entre le second sommateur (25, 35) et le mélangeur (27, 37).

7. Équipement de communication (1) selon la revendication 6, **caractérisé par le fait que** l'équipement de communication (1) comprend en outre, pour chaque dispositif à restitution de l'environnement sonore, un module de gain adaptatif (28, 38) permettant d'atténuer le signal de bruit environnant source ($brs_1$, $brs_2$) de l'au moins un dispositif à restitution de l'environnement sonore avant de générer le signal de bruit environnant ($br_1$, $br_2$) correspondant à l'au moins un dispositif à restitution de l'environnement sonore destiné à être transmis au haut-parleur (21, 31) de l'au moins un dispositif à restitution de l'environnement sonore.

8. Équipement de communication (1) selon la revendication 7, **caractérisé par le fait que** l'atténuation du signal de bruit environnant source ($brs_1$, $brs_2$) de l'au moins un dispositif à restitution de l'environnement sonore dépend d'un niveau sonore du signal de bruit environnant ($br_1$, $br_2$).

9. Équipement de communication (1) selon la revendication 7 ou la revendication 8, **caractérisé par le fait que** l'équipement de communication (1) est configuré de telle sorte que l'atténuation permet que le niveau sonore du son du signal de bruit environnant ($br_1$, $br_2$) correspondant à l'au moins un dispositif à restitution de l'environnement sonore généré par le haut-parleur (21, 31) de l'au moins un dispositif à restitution de l'environnement sonore soit toujours inférieur à une valeur seuil.

10. Équipement de communication (1) selon l'une quelconque des revendications 1 à 9, **caractérisé par le fait qu'**au moins une opération effectuée par l'équipement de communication (1), sur l'au moins un signal de phonie source ($p_0$, $-p_0$) ou sur un signal intermédiaire entre l'au moins un signal de phonie source ($p_0$, $-p_0$) et le signal de sortie total ($x$), est effectuée par un processeur (Proc.).

11. Équipement de communication (1) selon l'une quelconque des revendications 1 à 10, **caractérisé par le fait que** le module de traitement de signal de sortie total (6) est mis en œuvre par au moins l'un parmi un processeur (Proc), un microcontrôleur, un microprocesseur, un processeur de signaux numériques (DSP), une matrice prédiffusée programmable (FPGA), un circuit intégré à application spécifique (ASIC).

12. Équipement de communication (1) selon l'une quelconque des revendications 1 à 11, **caractérisé par le fait qu'**au moins l'un parmi le premier dispositif (2) et le second dispositif (3) est une protection auditive intra-auriculaire.

13. Système de communication apte à permettre à un utilisateur de participer à une communication en duplex intégral avec au moins un interlocuteur avec une prise de son dans l'oreille pour l'utilisateur, **caractérisé par le fait que** le système comprend un équipement de communication (1) selon l'une quelconque des revendication 1 à 12 pour l'utilisateur, au moins un appareil de communication utilisateur pour l'utilisateur et au moins un appareil de communication interlocuteur pour chaque interlocuteur, chaque appareil de communication utilisateur étant apte à communiquer avec au moins l'un des appareils interlocuteurs, chaque appareil de communication utilisateur étant configuré pour transmettre au moins un signal de phonie source ($p_0$, $-p_0$) à l'équipement de communication (1) utilisateur, et l'équipement de communication (1) utilisateur étant configuré pour délivrer en sortie un signal de sortie total ($x$) destiné à générer au moins un signal de phonie de retour ($p_r$, $-p_r$) destiné à être transmis à au moins l'un des appareils de communication interlocuteurs par l'un des appareils de communication utilisateurs ; les interlocuteurs utilisant éventuellement un équipement de communication (1) selon l'une quelconque des revendication 1 à 12.

14. Système selon la revendication 13, **caractérisé par le fait qu'**au moins l'un des appareils de communication est l'un parmi une radio, un talkie-walkie, un téléphone, un téléphone intelligent, une tablette numérique et un ordinateur.

**Patentansprüche**

1. - Kommunikationsausrüstung (1) mit Voll-Duplex-Funktion, wobei die Töne im Ohr aufgenommen werden und die Kommunikationsausrüstung (1) so ausgelegt ist, dass sie mindestens ein Quelltonsignal ($p_0$, $-p_0$) empfängt, das von mindestens einem Kommunikationsgerät übertragen wird und ein Gesamtausgangssignal (x) liefert, wobei die Kommunikationsausrüstung (1) folgendes einschließt:

   - Ein erstes Gerät (2), das dazu bestimmt ist, in eines (O1) der beiden Ohren entweder das rechte oder das linke Ohr eines Nutzers eingeführt zu werden, und
   - Ein zweites Gerät (3), das dazu bestimmt ist, in das andere (O2) der beiden Ohren entweder das rechte oder das linke Ohr des Nutzers eingeführt zu werden;
   - Wobei jedes der Geräte, das erste Gerät (2) und das zweite Gerät (3) ein erstes Mikrophon (22, 32) und einen Lautsprecher (21, 31) enthält, die so angeordnet sind, dass sie, bei Nutzung, vor einem Gehörgang des Nutzers angebracht werden;

   **dadurch gekennzeichnet, dass**:

   - Die Kommunikationsausrüstung (1) so ausgelegt ist, dass ein erstes Tonsignal (-p) an den Lautsprecher (21) des ersten Geräts (2) gesendet wird und ein zweites Tonsignal (p) an den Lautsprecher (31) des zweiten Geräts (3) gesendet wird, wobei das erste (-p) und zweite (p) Tonsignal auf mindestens einem Quelltonsignal ($p_0$, $-p_0$) derart basieren, dass das erste Tonsignal (-p) und das zweite Tonsignal (p) in Phasenopposition sind, das heißt um Pi phasenverschoben sind;
   - Das erste Mikrophon (22, 32) des ersten (2) beziehungsweise zweiten (3) Geräts ist so ausgelegt, dass im jeweiligen Ohr (01, O2) mindestens eine Stimme (s) des Nutzers und ein Ton des ersten (-p), beziehungsweise des zweiten (p) Tonsignals erfasst wird, das vom Lausprecher (21, 31) des ersten (2) beziehungsweise des zweiten (3) Geräts generiert wird, um ausgangsseitig ein Tonsignal ($ps_1$, $ps_2$) des ersten (2) beziehungsweise des zweiten (3) Geräts zu liefern;
   - Die Kommunikationsausrüstung (1) ist so ausgelegt, dass sie ein Vorausgabe-Signal ($S_1$) erzeugt, das dem ersten Gerät (2) entspricht und ein Vorausgabe-Signal ($S_2$), das dem zweiten Gerät (3) entspricht, jeweils ausgehend vom Tonerfassungssignal ($ps_1$, $ps_2$) des ersten (2) und des zweiten (3) Geräts, und dass sie ein Ausgangssignal $x_1$ generiert, welches dem ersten Gerät (2) entspricht und ein Ausgangssignal ($x_2$), welches dem zweiten Gerät (3) entspricht, und jeweils mindestens eine Komponente aus dem Vorausgabe-Signal ($S_1$) des ersten Geräts (2) beinhaltet und eine Komponente aus dem Vorausgabe-Signal ($S_2$) des zweiten Geräts (3) beinhaltet; und
   - Die Kommunikationsausrüstung (1) schließt weiterhin einen ersten Summierer (4) ein, der zum eingangsseitigen Empfang und zum Summieren des Ausgangssignals ($x_1$) des ersten Geräts (2) und des Ausgangssignals ($x_2$) des zweiten Geräts (3) ausgelegt ist, wobei der erste Summierer (4) ausgangsseitig ein Gesamtausgangssignal (x) liefert, das der Summe des Ausgangssignals (x1) des ersten Geräts (2) und des Ausgangssignals (x2) des zweiten Geräts (3) entspricht, wobei das Gesamtausgangssignal (x) eine Komponente der Stimme (s) des Nutzers enthält und frei ist von Komponenten des ersten und zweiten Tonsignals (-p, p).

2. - Kommunikationsausrüstung (1) nach Anspruch 1, **dadurch gekennzeichnet, dass** die Kommunkationsausrüstung (1) außerdem ein Modul zur Verarbeitung des Gesamtausgangssignals (6) enthält, das so ausgelegt ist, dass das Gesamtausgangssignal (x) so verarbeitet wird, dass, ausgehend vom Gesamtausgangssignal (x), mindestens eines von einem Rückkopplungstonsignal (pr, -pr) oder von zwei Rückkopplungstonsignalen (pr, -pr) in Phasenopposition erzeugt wird, wobei die Verarbeitung mindestens einer Verringerung des Okklusionseffekts und/oder einer verminderten Wirkung der Knochenschallübertragung, und/oder einer Verstärkung entspricht, damit der Gesprächspartner ein natürlicheres Gesamtausgangssignal (x) erhält.

3. - Kommunikationsausrüstung (1) nach Anspruch 1 oder 2, **gekennzeichnet dadurch, dass** die Kommunikationsausrüstung (1) so ausgelegt ist, dass sie zwei Quelltonsignale ($p_0$, $-p_0$) in Phasenopposition aus jedem Kommunikationsgerät empfängt, um eines ($-p_0$) der beiden Quelltonsignale ($p_0$, $-p_0$) zu nutzen, damit das erste Tonsignal (-p) erzeugt und an den Lautsprecher (21) des ersten Geräts (2) übertragen wird, und um das zweite (p0) Quelltonsignal ($p_0$, $-p_0$) zu nutzen, damit das zweite Tonsignal (p) erzeugt und an den Lautsprecher (31) des zweiten Geräts (3) übertragen wird.

4. - Kommunikationsausrüstung (1) nach Anspruch 1 oder 2, **gekennzeichnet dadurch, dass** die Kommunikationsausrüstung (1) ein Modul zur Verarbeitung des Quelltonsignals (5) beinhaltet, das so ausgelegt ist, dass es ein

einziges Quelltonsignal ($p_0$) aus jedem Kommunikationsgerät empfängt und es das erste Tonsignal (-p) und das zweite Tonsignal (p) in Phasenopposition ausgehend von mindestens einem Quelltonsignal ($p_0$) erzeugt.

**5.** - Kommunikationsausrüstung (1) nach Anspruch 4, **dadurch gekennzeichnet, dass** die Kommunikationsausrüstung (1) so ausgelegt ist, dass mindestens ein Quelltonsignal ($p_0$) um Pi phasenverschoben ist, um das erste Tonsignal (-p) zu erzeugen, und dass das Quelltonsignal ($p_0$) nicht phasenverschoben ist, um das zweite Tonsignal (p) zu erzeugen.

**6.** - Kommunikationsausrüstung (1), nach einem beliebigen der Ansprüche 1 bis 5, **dadurch gekennzeichnet, dass** mindestens ein Gerät, das als Vorrichtung zur Wiederherstellung der Schallumgebung dient, sei es das erste Gerät (2) und/oder das zweite Gerät (3) ein zweites Mikrophon (24, 34) enthält, welches auf einer externen Oberfläche mindestens einer Vorrichtung zur Wiederherstellung der Schallumgebung angebracht ist und nach außen zeigt, wobei das zweite Mikrophon (24, 34) dafür konfiguriert ist, Umgebungsgeräusche zu erfassen und ein Quell-ausgangssignal der Schallumgebung ($brs_1$, $brs_2$) von mindestens einer Vorrichtung zur Wiederherstellung der Schallumgebung zu liefern; dabei ist die Kommunikationsausrüstung so ausgelegt, dass sie ausgehend von dem Quellsignal der Schallumgebung zur Wiederherstellung der Schallumgebung ($br_1$, $br_2$) ein Schallumgebungssignal ($br_1$, $br_2$) von mindestens einer Vorrichtung zur Wiederherstellung der Schallumgebung erzeugt;

weiterhin beinhaltet die Kommunikationsausrüstung (1) für jede Vorrichtung zur Wiederherstellung der Schallumgebung:

- einen zweiten Summierer (25, 35), welcher so ausgelegt ist, dass er eingangsseitig empfängt und das Signal der Umgebungsgeräusche ($br_1$, $br_2$) von mindestens einer Vorrichtung zur Wiederherstellung der Schallumgebung und das Tonsignal (- p, p) summiert, welches an den Lautsprecher (21, 31) mindestens einer Vorrichtung zur Wiederherstellung der Schallumgebung gesendet wird, und so dass er am Ausgang die Summe an den Lautsprecher (21, 31) mindestens einer Vorrichtung zur Wiederherstellung der Schallumgebung sendet;
- ein Filtermodul (26, 36) verbunden mit dem zweiten Mikrophon (24, 34), welches so ausgelegt, dass es das Signal der Umgebungsgeräusche ($br_1$, $br_2$) von mindestens einer Vorrichtung zur Wiederherstellung der Schallumgebung empfängt, und dass es mit einer geschätzten Übertragungsfunktion ($\hat{h}_1$, $\hat{h}_2$) das Signal der Umgebungsgeräusche ($br_1$, $br_2$) von mindestens einer Vorrichtung zur Wiederherstellung der Schallumgebung filtert, und außerdem so dass es ausgangsseitig ein gefiltertes Signal der Umgebungsgeräusche ($brf_1$, $brf_2$) liefert; und
- einen Mischer (27, 37), wobei das erste Mikrophon (22, 32) von mindestens einer Vorrichtung zur Wiederherstellung der Schallumgebung zudem so ausgelegt ist, dass es im jeweiligen Ohr (01, O2) einen Ton für das Signal der Umgebungsgeräusche ($br_1$, $br_2$) erfasst aus mindestens einer Vorrichtung zur Wiederherstellung der Schallumgebung aus dem Lautsprecher (21, 31) von mindestens einer Vorrichtung zur Wiederherstellung der Schallumgebung, dabei ist der Mischer (27, 37) so ausgelegt, dass er eingangsseitig empfängt und das Vorausgabe-Signal ($S_1$, $S_2$) mindestens einer Vorrichtung zur Wiederherstellung der Schallumgebung und das gefilterte Signal der Umgebungsgeräusche ($brf_1$, $brf_2$) abzieht, und so dass er ausgangsseitig das Ausgangssignal ($x_1$, $x_2$) mindestens einer Vorrichtung zur Wiederherstellung der Schallumgebung abgibt, wobei das Ausgangssignal ($x_1$, $x_2$) von mindestens einer Vorrichtung zur Wiederherstellung der Schallumgebung dem Vorausgabe-Signal ($S_1$, $S_2$) von mindestens einer Vorrichtung zur Wiederherstellung der Schallumgebung abzüglich des gefilterten Signals der Umgebungsgeräusche ($brf_1$, $brf_2$) entspricht, und wobei das Ausgangssignal ($x_1$, $x_2$) von mindestens einer Vorrichtung zur Wieder-her-stellung der Schallumgebung frei ist von Komponenten aus dem Signal der Umgebungsgeräusche ($br_1$, $br_2$) aus mindestens einer Vorrichtung zur Wiederherstellung der Schallumgebung;

für jede Vorrichtung zur Wiederherstellung der Schallumgebung berechnet die geschätzte Übertragungsfunktion ($\hat{h}_1$, $\hat{h}_2$) eine gesamte Übertragungsfunktion zwischen dem zweiten Summierer (25, 35) und dem Mischer (27, 37).

**7.** - Kommunikationsausrüstung (1) nach Anspruch 6, **dadurch gekennzeichnet, dass** die Kommunikationsausrüstung (1) für jede Vorrichtung zur Wiederherstellung der Schallumgebung zusätzlich ein adaptives Verstärkungsmodul (28, 38) beinhaltet, zur Minderung des Quellsignals der Umgebungsgeräusche ($brs_1$, $brs_2$) von wenigsten einer Vorrichtung zur Wiederherstellung der Schallumgebung, bevor das Signal der Umgebungsgeräusche ($br_1$, $br_2$) von mindestens einer Vorrichtung zur Wiederherstellung der Schallumgebung generiert wird und an den Lautsprecher (21, 31) mindestens einer Vorrichtung zur Wiederherstellung der Schallumgebung übertragen wird.

8. - Kommunikationsausrüstung (1) nach Anspruch 7, **dadurch gekennzeichnet, dass** die Dämpfung des Quelltonsignals der Schallumgebung ($brs_1$, $brs_2$) mindestens einer Vorrichtung zur Wiederherstellung der Schallumgebung von einem Schallpegel des Signals der Umgebungsgeräusche ($br_1$, $br_2$) abhängt.

9. - Kommunikationsausrüstung (1) nach Anspruch 7 oder Anspruch 8, **dadurch gekennzeichnet, dass** die Kommunikationsausrüstung (1) so ausgelegt ist, dass die Dämpfung bewirkt, dass der Schallpegel des Signals der Umgebungsgeräusche ($br_1$, $br_2$) von mindestens einer Vorrichtung zur Wiederherstellung der Schallumgebung aus dem Lautsprecher (21, 31) mindestens einer Vorrichtung zur Wiederherstellung der Schallumgebung immer unter einem Schwellenwert liegt.

10. - Kommunikationsausrüstung (1) nach einem der Ansprüche 1 bis 9, **dadurch gekennzeichnet, dass** wenigstens ein Arbeitsgang der Kommunikationsausrüstung an mindestens einem Quelltonsignal ($p_0$, -$p_0$) oder einem Zwischensignal ($p_0$, -$p_0$) zwischen mindestens einem Quelltonsignal und dem Gesamtausgangssignals (x) von einem Prozessor (Proc.) erledigt wird.

11. - Kommunikationsausrüstung (1) nach einem der Ansprüche 1 bis 10, **dadurch gekennzeichnet, dass** das Modul zur Verarbeitung des Gesamtausgangssignals (6) mindestens durch einen Prozessor (Proc), und/oder einen Microcontroller, und/oder einen Microprozessor, und/oder einen digitalen Signalprozessor (DSP), und/oder einen programmierbaren integrierten Schaltkreis (FPGA) und/oder eine anwendungsspezifische integrierte Schaltung (ASIC) betrieben wird.

12. - Kommunikationsausrüstung (1) nach einem der Ansprüche 1 bis 11, **dadurch gekennzeichnet, dass** mindestens das erste Gerät (2) und/oder das zweite Gerät (3) einen intraaurikulären Gehörschutz bietet.

13. - Kommunikationssystem, das es einem Nutzer ermöglicht, in Voll-Duplex mit mindestens einem Gesprächspartner zu kommunizieren, wobei die Tonerfassung des Nutzers in dessen Ohr erfolgt, **gekennzeichnet dadurch, dass** das System ein Kommunikationsgerät (1) nach einem der Ansprüche 1 bis 12 für den Nutzer beinhaltet, sowie mindestens ein Nutzer-Kommunikationsgerät für den Nutzer und mindestens ein Partner-Kommunikationsgerät für jeden Gesprächspartner, wobei jedes Nutzer-Kommunikationsgerät mit mindestens einem der Partner-Kommunikationsgeräte kommunizieren kann, und jedes Nutzer-Kommunikationsgerät so ausgelegt ist, dass es mindestens ein Quelltonsignal ($p_0$, -$p_0$) der Nutzer-Kommunikationsausrüstung (1) überträgt, und die Nutzer-Kommunikationsausrüstung (1) so ausgelegt ist, dass sie ausgangsseitig ein Gesamtausgangssignal (x) liefert mit dem Ziel mindestens ein Rückkopplungstonsignal zu liefern (pr, -pr), welches mindestens einem der Partner-Kommunikationsgeräte durch eines der Nutzer-Kommunikationsgeräte übertragen werden soll; die Gesprächspartner verwenden dabei eventuell eine Kommunikationsausrüstung (1) nach einem der Ansprüche 1 bis 12.

14. - System nach Anspruch 13, **gekennzeichnet dadurch, dass** mindestens ein Kommunikationsgerät entweder ein Funkgerät, ein Handfunkgerät, ein Telefon, ein Smartphone, ein Tablet oder ein PC ist.

## Claims

1. - A communication equipment (1) allowing full duplex with in-ear sound pickup, the communication equipment (1) being configured to receive at least one source speech signal ($p_0$, -$p_0$) transmitted by at least one communication apparatus and to provide a total output signal (x), the communication equipment (1) comprising:

    - a first device (2) intended to be inserted into one (01) from among a right ear and a left ear of a user, and
    - a second device (3) intended to be inserted into the other (O2) from among the right ear and the left ear of the user;
    - each from among the first device (2) and the second device (3) comprising a first microphone (22, 32) and a loudspeaker (21, 31) configured to be arranged, in use, facing an ear canal of the user;

    **characterized in that**:

    - the communication equipment (1) is configured in such a way that a first speech signal (-p) is provided to the loudspeaker (21) of the first device (2) and a second speech signal (p) is provided to the loudspeaker (31) of the second device (3), the first (-p) and second (p) speech signals being based on the at least one source speech signal ($p_0$, -$p_0$) in such a way that the first speech signal (-p) and the second speech signal (p) are in phase opposition, in other words, phase-shifted by Pi;

- the first microphone (22, 32) of the first (2), respectively second (3), device is configured to pick up, in the respective ear (01, O2), at least one voice (s) of the user and one sound of the first (-p), respectively second (p), speech signal generated by the loudspeaker (21, 31) of the first (2), respectively second (3), device, and to output a sound pick-up signal ($ps_1$, $ps_2$) of the first (2), respectively second (3), device;

- the communication equipment (1) is configured to generate a pre-output signal ($s_1$) corresponding to the first device (2) and a pre-output signal ($s_2$) corresponding to the second device (3), respectively, from the sound pick-up signal ($ps_1$, $ps_2$) of the first (2) and the second (3) devices, and to generate an output signal ($x_1$) corresponding to the first device (2) and an output signal ($x_2$) corresponding to the second device (3), comprising, respectively, at least one component related to the pre-output signal ($s_1$) corresponding to the first device (2) and one component related to the pre-output signal ($s_2$) corresponding to the second device (3); and

- the communication equipment (1) further comprises a first summer (4) configured to receive as input and to sum the output signal ($x_1$) of the first device (2) and the output signal ($x_2$) of the second device (3), the first summer (4) outputting the total output signal (x) equal to the sum of the output signal ($x_1$) of the first device (2) and the output signal ($x_2$) of the second device (3), and the total output signal (x) comprising a voice component (s) of the user and being free of components of the first and second speech signals (-p, p).

2. - The communication equipment (1) according to claim 1, **characterized in that** the communication equipment (1) further comprises a total output signal processing module (6) configured to process the total output signal (x) in order to generate, from the total output signal (x), at least one from among a return speech signal ($p_r$, $-p_r$) and two return speech signals ($p_r$, $-p_r$) in phase opposition, the processing being at least one from among a reduction in the occlusion effect, a reduction in the bone transmission effect, and an amplification, in order to render the total output signal (x) more natural for the interlocutor.

3. - The communication equipment (1) according to any one of claims 1 and 2, **characterized in that** the communication equipment (1) is configured to receive two source speech signals ($p_0$, $-p_0$) in phase opposition coming from each communication apparatus, to use one ($-p_0$) of the two source speech signals ($p_0$, $-p_0$) in order to generate the first speech signal (-p) and provide it to the loudspeaker (21) of the first device (2), and to use the other ($p_0$) of the two source speech signals ($p_0$, $-p_0$) to generate the second speech signal (p) and provide it to the loudspeaker (31) of the second device (3).

4. - The communication equipment (1) according to any one of claims 1 and 2, **characterized in that** the communication equipment (1) comprises a source speech signal processing module (5) configured to receive a single source speech signal ($p_0$) coming from each communication apparatus and to generate the first speech signal (-p) and the second speech signal (p) in phase opposition from the at least one source speech signal ($p_0$).

5. - The communication equipment (1) according to claim 4, **characterized in that** the communication equipment (1) is configured to phase-shift by Pi, the at least one source speech signal ($p_0$) in order to generate the first speech signal (-p), and not to phase-shift the source speech signal ($p_0$) in order to generate the second speech signal (p).

6. - The communication equipment (1) according to any one of claims 1 to 5, **characterized in that** at least one device, referred to as a sound environment playback device, from among the first device (2) and the second device (3) comprises a second microphone (24, 34), arranged on an external surface of the at least one sound environment playback device and directed toward the exterior, the second microphone (24, 34) being configured to pick up an environmental noise and output an environmental noise source signal ($brs_1$, $brs_2$) to the at least one sound environment playback device;

the communication equipment being configured to generate an environmental noise signal ($br_1$, $br_2$) corresponding to the at least one sound environment playback device from the environmental noise source signal ($brs_1$, $brs_2$);

the communication equipment (1) further comprises, for each sound environment playback device:

- a second summer (25, 35) configured to receive as input and to sum the environmental noise signal ($br_1$, $br_2$) corresponding to the at least one sound environment playback device and the speech signal (-p, p) configured to be provided to the loudspeaker (21, 31) of the at least one sound environment playback device, and to output the sum to the loudspeaker (21, 31) of the at least one sound environment playback device;

- a filter module (26, 36), connected to the second microphone (24, 34) configured to receive the environmental noise signal ($br_1$, $br_2$) corresponding to the at least one sound environment playback device, to filter the environmental noise signal ($br_1$, $br_2$) corresponding to the at least one sound environment playback device by an estimated transfer function ($\hat{h}_1$, $\hat{h}_2$), and to output a filtered environmental noise signal ($brf_1$, $brf_2$); and

- a mixer (27, 37), the first microphone (22, 32) of the at least one sound environment playback device being further configured to pick up, in the respective ear (01, O2), a sound of the environmental noise signal ($br_1$, $br_2$) corresponding to the at least one sound environment playback device generated by the loudspeaker (21, 31) of the at least one sound environment playback device, the mixer (27, 37) being configured to receive as input and to subtract the pre-output signal ($s_1$, $s_2$) corresponding to the at least one sound environment playback device and the filtered environmental noise signal ($brf_1$, $brf_2$), and to output the output signal ($x_1$, $x_2$) corresponding to the at least one sound environment playback device, the output signal ($x_1$, $x_2$) corresponding to the at least one sound environment playback device being equal to the pre-output signal ($s_1$, $s_2$) corresponding to the at least one sound environment playback device from which the filtered environmental noise signal ($brf_1$, $brf_2$) is subtracted, and the output signal ($x_1$, $x_2$) corresponding to the at least one sound environment playback device being free of the environmental noise signal ($br_1$, $br_2$) component corresponding to the at least one sound environment playback device;

for each sound environment playback device, the estimated transfer function ($\hat{h}_1$, $\hat{h}_2$) modeling a global transfer function between the second summer (25, 35) and the mixer (27, 37).

7. - The communication equipment (1) according to claim 6, **characterized in that** the communication equipment (1) further comprises, for each sound environment playback device, an adaptive gain module (28, 38) allowing to attenuate the environmental noise source signal ($brs_1$, $brs_2$) of the at least one sound environment playback device before generating the environmental noise signal ($br_1$, $br_2$) corresponding to the at least one sound environment playback device intended to be transmitted to the loudspeaker (21, 31) of the at least one sound environment playback device.

8. - The communication equipment (1) according to claim 7, **characterized in that** the attenuation of the environmental noise source signal ($brs_1$, $brs_2$) of the at least one sound environment playback device depends on a sound level of the environmental noise signal ($br_1$, $br_2$).

9. - The communication equipment (1) according to claim 7 or claim 8, **characterized in that** the communication equipment (1) is configured in such a way that the attenuation allows that the sound level of the environmental noise signal ($br_1$, $br_2$) corresponding to the at least one sound environment playback device generated by the loudspeaker (21, 31) of the at least one sound environment playback device is always below a threshold value.

10. - The communication equipment (1) according to any one of claims 1 to 9, **characterized in that** at least one operation executed by the communication equipment (1), on the at least one source speech signal ($p_0$, $-p_0$) or on an intermediate signal between the at least one source speech signal ($p_0$, $-p_0$) and the total output signal (x), is executed by a processor (Proc.).

11. - The communication equipment (1) according to any one of claims 1 to 10, **characterized in that** the total output signal processing module (6) is implemented by at least one from among a processor (Proc), a microcontroller, a microprocessor, a digital signal processor (DSP), a field-programmable gate array (FPGA), an application-specific integrated circuit (ASIC).

12. - The communication equipment (1) according to any one of claims 1 to 11, **characterized in that** at least one from among the first device (2) and the second device (3) is an in-ear hearing protector.

13. - A communication system able to allow a user to participate in full duplex communication with at least one interlocutor with in-ear sound pickup for the user, **characterized in that** the system comprises a communication equipment (1) according to any one of claims 1 to 12 for the user, at least one user communication apparatus for the user and at least one interlocutor communication apparatus for each interlocutor, each user communication apparatus being able to communicate with at least one of the interlocutor apparatuses, each user communication apparatus being configured to transmit at least one source speech signal ($p_0$, $-p_0$) to the user communication equipment (1), and the user communication equipment (1) being configured to output a total output signal (x) intended to generate at least one return speech signal ($p_r$, $-p_r$) intended to be transmitted to at least one of the interlocutor communication apparatuses by one of the user communication apparatuses; the interlocutors possibly using a communication equipment (1) according to any one of claims 1 to 12.

14. - The system according to claim 13, **characterized in that** at least one of the communication apparatuses is one from among a radio, a walkie-talkie, a telephone, a smart phone, a digital tablet and a computer.

[Fig. 1]

Fig. 1

[Fig. 2]

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3188507 A1
- US 2009147966 A1
- US 2022014849 A1

**Littérature non-brevet citée dans la description**

- **ELLIOTT H. BERGER** ; **RONALD W. KIEPER** ; **DAN GAUGER**. Hearing protection: Surpassing the limits to attenuation imposed by the bone-conduction pathways » (Protection auditive : surmonter les limites de l'atténuation imposée par les trajets de conduction osseuse). *J. Acoust. Soc. Am.*, 01 October 2003, vol. 114 (4)